# EUROPEAN PATENT SPECIFICATION

(11) **EP 1 972 207 B1**
(45) Date of publication and mention of the grant of the patent: **28.02.2018**
(21) Application number: 07104564.5
(22) Date of filing: 21.03.2007
(51) Int. Cl.: A23L 3/3571, A23L 33/135

(54) **Safety System For Powdered Nutritional Compositions**
Sicherheitssystem für pulverförmige Ernährungszusammensetzungen
Système de sécurité pour compositions nutritionnelles en poudre

(43) Date of publication of application: 24.09.2008
(73) Proprietor: Nestec S.A., 1800 Vevey (CH)
(72) Inventor: Joosten, Henricus, 1074, Mollie-Margot (CH); Breeuwer, Pieter, 1023, Crissier (CH); Cordier, Jean-Louis, 1806, ST-Legier (CH)
(74) Representative: Corticchiato, Olivier

(56) References cited:
- EP-A- 0 443 543
- EP-A- 0 643 136
- EP-A- 0 904 784
- EP-A- 1 195 095
- WO-A-02/065840
- WO-A-2004/054371
- WO-A-2004/112509
- US-A1- 2004 072 794
- CAPLICE E AND FITZGERALD G F: "Food fermentations: role of microorganisms in food production and preservation" INTERNATIONAL JOURNAL OF FOOD MICROBIOLOGY, ELSEVIER SCIENCE PUBLISHERS, AMSTERDAM, NL, vol. 50, 1999, pages 131-149, XP002363836 ISSN: 0168-1605
- LEROY F ET AL: "A novel area of predictive modelling: Describing the functionality of beneficial microorganisms in foods" INTERNATIONAL JOURNAL OF FOOD MICROBIOLOGY, ELSEVIER SCIENCE PUBLISHERS, AMSTERDAM, NL, vol. 73, no. 2-3, 11 March 2002 (2002-03-11), pages 251-259, XP002363837 ISSN: 0168-1605

## Description

The present invention relates to a powdered nutritional composition comprising living lactic acid bacteria, to the use of living lactic acid bacteria in powdered nutritional compositions as a safety system against growth of pathogenic bacteria, to the use of living lactic acid bacteria in powdered nutritional compositions for acidifying powdered nutritional compositions, and to a method for reducing the occurrence and/or growth of pathogenic bacteria in powdered nutritional compositions.

### The Background Art

Gastrointestinal infections, leading to diarrhoea, are still among the principal causes of death during infancy and are often due to bacterial contamination of water or food.

Breast-feeding reduces the exposure to these pathogens and also supplies the infant with protective antibodies against food-borne pathogens, resulting in lower incidence of diarrhoea. However, breast-feeding is not always possible, for example if a mother has to leave her child at home or with childcare during work. Furthermore, breast-feeding is not recommended if there is a risk of HIV transmission (Weinberg G. The dilemma of postnatal mother-to-child transmission of HIV: to breastfeed or not? Birth 2000; 27(3)).

In the context of the present invention, the fact that feeding of nutritional formulae may increase risks for gastrointestinal infections is particularly looked at. It was observed that certain pathogens are capable of contaminating powdered infant formulas after reconstitution with water. For example, if the tap water used for reconstitution is not sterilised by boiling beforehand, a pathogen may arrive in the liquid formula intended for the feeding of a baby, due to its natural occurrence in water supply systems or accessible fountains.

However, the probability for infection of an individual is increased if the pathogen is present in relatively high concentrations. Generally, if a powdered formula is consumed quickly after reconstitution with water, pathogens are likely to be absent or present in very low concentrations not sufficient to cause a disease state in an individual.

In reality, and contrary to product prescriptions, the reconstituted nutritional composition is often not consumed within a reasonably short time after reconstitution. A typical problematic situation at home is found if a baby refuses to drink the whole bottle of reconstituted formula and the mother puts the half-empty bottle aside for later consumption. In a paediatric clinic it may occur that several bottles of reconstituted infant formulae are prepared at the same time and kept at about 37°C, a temperature which is not only very convenient for consumption, but which entails optimal growth conditions for various pathogens. If a bottle is fed only after several hours of incubation, a pathogen has had enough time to reach high concentrations, increasing the likelihood of infection. The same holds true, of course, if the ambient conditions already support pathogen growth, as is the case in warm tropical or sub-tropical climate. Here a few hours of ambient temperatures may suffice for a pathogen to develop in a reconstituted composition.
Many other problematic circumstances can be conceived, such as the above-depicted, where pathogens having found their way into a reconstituted nutritional composition can exploit the ideal habitat formed by the abundant macro-and micronutrients present in the liquid composition. An infection of an individual may be the consequence, followed by disease, and, depending of the kind of pathogen, even death.
The prior art addresses the problems linked to contamination and proliferation of pathogens in nutritional compositions such as infant formula in various ways.
One way of solving the problem is the addition of a specific anti-microbial agent, as is taught in WO 96/25054. However, for infants the consumption of anti-microbial agents on a regular base should be avoided because of potential damage to the liver and, in addition because anti-microbial agents often exhibit undesirable side effects.
The European application EP 02028285.1 discloses a powdered infant formula, which is chemically acidified with L+ lactic acid. It was found that at or below a pH of 5 in a reconstituted infant formula the growth of pathogens such as *Salmonella typhium, Vibrio cholerae,* amongst others, can effectively be suppressed. EP-A-0 443 543 describes the use of lactic acid bacteria (for example Streptococcus thermophilus) to produce acid in food products (milk products) as antimicrobials against pathogenic bacteria. WO-A-2004/054371 describes reconstitutable powdered infant formula with added lactic acid (from lactic acid bacteria) to decrease the pH to prevent the growth of pathogenic micro organisms. Presently, one can find infant formulae on the market, which contain probiotics, that is, living bacteria having a beneficial effect on their consumer. Probiotics have shown to generally improve the intestinal condition of a consumer, concretely, they are considered to alleviate constipation, prevent diarrhoea, reinforce the immune system, prevent cancer, and may increase mineral absorption. An example of a powdered infant formula comprising probiotics is BEBA 2 HA, commercialised under the NESTLE trademark, which comprises about 2x10⁷ CFU/g of probiotic stains (*Streptococcus thermophilus* and *Bifidobacterium lactis*)*.* This corresponds to about 3x10⁶ CFU/ml in the reconstituted product.

The objective of the present invention is to provide even safer powdered infant formula. In particular, it is an objective to provide a powdered infant formula including a safety system that prevents pathogens from growing in the formula after its reconstitution.

It is a further objective of the present invention to provide powdered infant formula in which growth of pathogens is increasingly inhibited following reconstitution, the formula being preferably free of antibiotics or anti-microbial agents.

Another objective of the present invention is to further increase the safety of formula-feeding in infants. In particular, the risks of infection with pathogens entailed by delaying consumption of the powdered formula after reconstitution are to be reduced.

Still another objective of the present invention is a powdered infant formula comprising a safety system against pathogens, which does not essentially compromise the taste of the product, unless it has been subjected to in appropriate storage conditions.

In addition, it is an objective of the present invention to provide a powdered infant formula which, when reconstituted and put aside for several hours, produces an optical signal indicating that the product is no longer suitable for feeding to an infant.

Furthermore, it is an objective of the present invention to increase safety of infant formulas without using additional ingredients or active principles not usually present in powdered infant formula, let alone ingredients, which are generally not recommended for consumption by babies, infants or children.

### Summary of the Invention

Surprisingly, it was found that living Streptococcus thermophilus TH4 (DSM 15957) with the amount of 5x10⁷CFU/g of powder in a powdered infant formula is capable of very rapidly acidifying the infant formula following reconstitution and inhibiting pathogenic bacteria.
Accordingly, the present invention provides, in a first aspect, a powdered infant formula comprising living Streptococcus thermophilus TH4 (DSM 15957) in an amount of at least 5x10⁷ CFU/g of powder.
In a second aspect, the present invention provides a method of reducing the growth of pathogenic bacteria in powdered infant formula after reconstitution, the method comprising the step of including living Streptococcus thermophilus TH4 (DSM 15957) in the powdered infant formula in an amount of at least 5x10⁷ CFU/g of powder.
The invention further extends to a powdered infant formula comprising living Streptococcus thermophilus TH4 (DSM 15957) which, if reconstituted in water according to prescription and stored at 37°C for 6 hours is characterised by a decrease in pH of at least 1 log point. Preferably the pH of the formula directly after reconstitution is above 5 but falls to 5 or less 6 hours after reconstitution if kept at room temperature.
In the Figures 1 - 3 the concentrations of three different pathogenic bacteria in reconstituted infant formulas are shown during 6 hours after reconstitution.
Figure 1 shows the fate of *Escherichia coli,* Figure 2 *Salmonella Typhimurium* and Figure 3 the one of *Enterobacter sakazakii.*
The present invention provides a number of unexpected advantages.

First, it is surprising that Streptococcus thermophilus TH4 (DSM 15957) can be added to powdered compositions in a way that acidification starts very soon after reconstitution and that this is sufficient to inhibit the growth of pathogens in the composition.

In addition, the acidification process due to the activity of the lactic acid bacteria after reconstitution usually causes a phase-separation only a few hours following reconstitution. In this way, an optical signal that the formula has been stored for too long a time and should no longer be fed to the baby is provided to the mother.

Further, the safety system has a taste advantage over infant formulas that are directly or biologically acidified in order to prevent pathogen growth. The present formula is not strongly acidic immediately after reconstitution nor does acidity develop if the reconstituted formula is stored properly, for example under chilled conditions. This means that infant formula according to the invention is more acceptable to both babies and their caretakers than the permanently acidified formulas of the prior art.

### Detailed Description of the Invention

Within the context of this specification the word "comprises" is taken to mean "includes, among other things". It is not intended to be construed as "consists of only".

In the context of the present invention, the words "reconstituted according to prescription" mean that a powdered infant formula, which is marketed or sold as a product, is reconstituted with water, according to the indications associated with the product. Normally, the packaging of the product or accompanying instruction manual or directions for use specify the amount of liquid to be added to a specific amount of powder.

In the context of the present invention the words "decrease in pH of at least 1 log point" refers to the logarithm on the base of ten. For illustration it is exemplified that a decrease from pH 6.6 to pH 4. 8 would be a decrease of 1.8 log points.

The powdered infant formula according to the present invention may be characterised by its ability to produce a decrease in pH of at least 1 log point after reconstitution and storage at 37°C for six hours. Preferably, the decrease in pH is at least 1.5, more preferably at least 1.7, even more preferably at least 2 and most preferably at least 2.5 log points. In an embodiment, the powdered infant formula according to the present invention is characterised in that, if reconstituted in water according to prescription and stored at 37°C for 6 hours, it has a pH of 5 or lower. Storage at 37° for 6 hours may be performed in a water bath at 37 +/- 1 °C.
In the context of the present invention, the term living lactic acid bacteria refers to one or a plurality of living bacterial strains present in the powdered infant formula and capable of providing the desired acidifying effect after the powder is reconstituted.
As noted above, the powdered infant formula of the invention does not need to be strongly acidic immediately after reconstitution according to prescription. Preferably, therefore, the infant formula of the invention has a pH of above 5, more preferably above 6, most preferably above 6.5 directly after reconstitution according to prescription.

The lactic acid bacterium is present in sufficient amounts that allow for a decrease in pH according to the invention. Preferably, a relatively rapidly acidifying bacterium is selected. In this case the amount of living CFU in the powdered infant formula may be kept relatively low.

Representatives of these species are available to the skilled person. For example, they are widely used in yoghurt production. They can be obtained, for example, from ALCE-PROBIOTICAL, Via P. Custodi, 12, 28100 Novarra, Italy; CENTRO SPERIMENTALEDEL LATTE (CSL), 26839 Zelo Buon Persico, (LODI), 3 Strada per Merlin, Italy; CSK food enrichment, Pallasweg, 1, 8938, Leeuwarden, Netherlands (http://www.cskfood.com); D.S.M. Food Specialities, Alexander Fleminglaan 1, 2613 AX Delft, Netherlands, (www.dsm-foodspecialties.com), to list just a few suppliers.

The lactic acid bacterium are present in amounts of at least 5x10⁷ CFU/g of powdered infant formula, preferably amounts of more than 10⁸, more preferably amounts above 5x10⁸ CFU/g.
After reconstitution according to prescription the infant formula preferably comprises at least 4x10⁶ CFU/ml. More preferably, the reconstituted formula comprises at least 7x10⁶, even more preferably, at least 10⁷, most preferably at least 2x10⁸ CFU/ml. For example the infant formula comprises, after reconstitution according to the product prescription, at least 5x10⁸ CFU/ml of the lactic acid bacteria.
Preferably, the strain or strains selected have acquired the FDA GRAS designation, and are hence generally regarded as safe.
Preferably, the strain or strains selected are probiotic.

The present invention surprisingly provides the use of living Streptococcus thermophilus TH4 (DSM 15957) for acidifying powdered infant formula after reconstitution with water. Hitherto, bacteria have been added to powdered infant formula only for their probiotic properties, such as their beneficial effect on the gut flora and the immune system.
The preparation of an infant formula according to the present invention comprises the steps of providing a powdered infant formula and adding living Streptococcus thermophilus TH4 (DSM 15957) to it.

The powdered infant formula of the invention may be a starter formula, a follow-up formula or a growing-up milk, that is, a fortified milk-based composition for feeding to babies and toddlers up to the age of three to four years. For simplicity, the term "infant formula" is used herein to cover all these products.

The infant formula may be whey adapted, casein-predominant, soy-based, and/or hypoallergenic. These products are commercially available and their method of production is known to the skilled person. Very briefly, the ingredients of the compositions are usually hydrated, heat treated, homogenised, and dried, for example roller dried or spray dried.

An example for the preparation of a powdered infant formula is disclosed in WO 0122837. This reference discloses suitable ingredients and, starting from page 7, line 31 to page 8, line 21, teaches how a powdered infant formula may be prepared.

The step of adding living lactic acid bacteria is preferably made by adding a powdered bacterial preparation, which can easily be dry-mixed with the powdered infant formula. The skilled person is aware of how such preparations may be obtained. In addition, these powdered bacterial preparations comprising living lactic acid bacteria are commercially available from many suppliers. Very briefly, an inoculum of lactic acid bacteria is added to a medium comprising nutrients that the bacterium can metabolise. The medium is preferably designed to support growth and/or multiplication. The temperature of the inoculated medium is adjusted to the optimal growth temperature of the bacterium and fermented for 6 - 15 hours. Thereafter, the living lactic acid bacteria may be separated from the bulk of the fermented medium and concentrated, for example by filtration or centrifugation. Preferably, carrier materials are added to the bacteria, such as milk powder, or mono-, oligo and/or polysaccharides, such as maltodextrin, for example. Very often, protective agents are added to the biomass of the bacteria for protection during a drying step. Then the bacteria are dried, for example by freeze-, roller-, fluidised bed-, or spray-drying. WO 98/10666 discloses a dehydrated food composition containing live probiotic lactic acid bacteria.

In WO 02/065840 A2 another way of adding living bacteria to a consumable product is disclosed. Accordingly, fresh biomass of probiotics, after being concentrated, is sprayed directly onto a dry food product. Since only little of the biomass has to be added in order to obtain sufficient amounts of living bacteria, a hot drying process may be omitted, since the dry food product absorbs the water still present in the biomass. In this way, the survival of bacteria is much higher.

The powdered infant formula comprising living Streptococcus thermophilus TH4 (DSM 15957) may then be filled in suitable packs and supplied in this form to a consumer.

### Example

The experiments below study the effects of different strains of lactic acid bacteria on the growth of pathogens in reconstituted infant formula. Commercially available powdered infant formula with probiotics is compared with infant formula according to the invention with increased amounts of specific probiotics in order to increase the acidification activity in the composition after reconstitution.

### MATERIALS

### Powdered Infant Formula

NAN 1 and BEBA 2 HA are powdered infant formulas sold by NESTLE-Group companies in various countries, such as Switzerland, for example. NAN 1 does not contain probiotics, while BEBA 2 HA contains *Streptococcus thermophilus* and *Bifidobacterium lactis* at a level of about 2x10⁷ CFU/g each.
BEBA 2 HA provides 477 kcal per 100 g of the powder and contains 14.3 g proteins, 59.1 g carbohydrates and 20.4 g fats. Ingredients are skimmed milk, lactose, vegetable oils, emulsifier (soy lecithin), minerals, vitamins, and the beneficial bacteria mentioned above.
NAN 1 provides 519 kcal per 100 g of powder and 68 kcal per 100ml if reconstituted according prescription. 100 g of powder contain 9.5 g protein, 58 g carbohydrates and 27.7 g of fats and 1.9 g of minerals.

Basic ingredients of the infant formulas are demineralised whey fraction, skimmed milk, lactose, vegetable oils, whey protein fraction, minerals and vitamins. The formulas also contains nucleotides.

### Probiotic Strains

### Streptococcus thermophilus (DSM 15957) Bifidobacterium lactis Bb12 (DSM 15954)

Both strains can be commercially obtained under the trade names TH4 and Bb12, respectively, from Christian Hansen Biosystems A/S (CHL), 10-12 Boge Allé. P.O. Box 407, DK-2970 Horsholm, Denmark.

The strains were freeze-dried separately and diluted in lactose for the purpose of the study. For each strain, the final concentration in the freeze-dried lactose powder was about 3x10⁹ cfu/g.

One gram of one or both strains in the powder was added to 100 ml reconstituted NAN 1 to reach a final concentration of about 3x10⁷ CFU/ml in the reconstituted infant composition. Where both strains were added, each of them was present in this concentration.

**Challenge strains**

| | |
|---|---|
| *Enterobacter sakazakii* | Strains FSM 155, 156 and 158 |
| *Salmonella enterica* serovar Typhimurium | Strain FSM 444, 469 and 496 |
| *Escherichia coli* O157:H7 (non-toxigenic) | Strain FSM 222 |

### CHALLENGE TEST

### Inoculation

Challenge strains were grown individually in Brain Heart Infusion (BHI, Oxoid CM225) broth for about 20h at 37 ± 1°C, after which strains of the same species were pooled and diluted in Tryptone Salt (TS, Tryptone; Oxoid L42; NaCl: Merck 6404). Portions of 100 ml of the reconstituted products were inoculated to reach a level of about 10³ CFU/ml. This level was chosen to allow relatively precise enumeration in case of both an increase or a decrease in micro organism numbers.

### Incubation

Inoculated infant formulas were incubated in a water bath at 37 ± 1°C for up to 6 h.

### Enumeration

After 0, 3 and 6 hours of incubations the pathogens were enumerated with the pour plate technique using Violet Red Bile Glucose Agar (VRBG, Oxoid CM 485).

### Measurement of pH

pH was measured using the Orion 960 Autochemistry System.

### RESULTS

### Microbiological quality of the infant powder NAN 1 before the experiments

The numbers of aerobic mesophilic organisms and Enterobacteriaceae was below 1 CFU/ml in the reconstituted product before starting the test.

### Effect of probiotic strains

NAN 1 was reconstituted and the two probiotic strains (Bb12, TH4) were added separately or together to obtain a concentration of about 3x10⁷ CFU/ml in the product. The products were then inoculated with the challenge strains and incubated at 37°C.

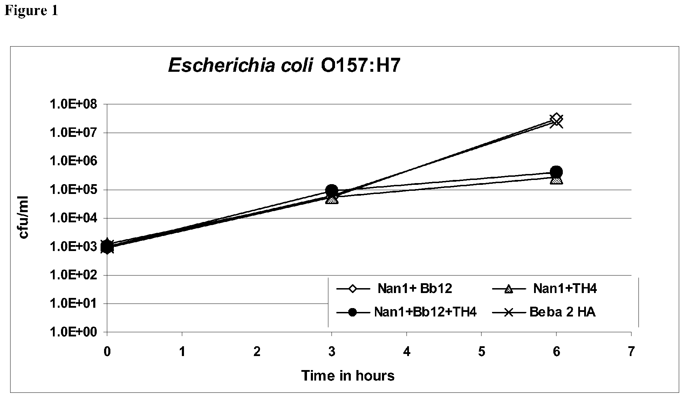

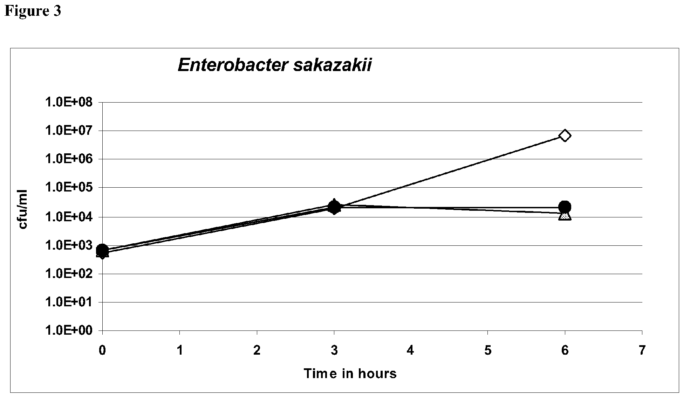

All three challenge strains initiated growth within 3 h in Nan 1. At about this time, the products containing TH4 became inhibitory, see Figures 1 - 3. Further growth of *E. coli* and *Salmonella* was reduced and stopped totally for *E. sakazakii.* After 6 hours there was a difference in counts of *E. sakazakii* of more than 2 log units in comparison with the product not containing probiotics. The inhibitory effect was also observed with NAN 1 containing both TH4 and Bb12, but not with Bb12 only. The most likely explanation is that only TH4 grows well in the product and starts to produce lactic acid, which acidifies the product. This was confirmed by measurements of pH at the end of experiments. In Nan 1 the pH dropped from 6.6 in freshly reconstituted product, to 4.3 when TH4 was present. With only Bb 12 there was no drop in pH, see Table 1 below.

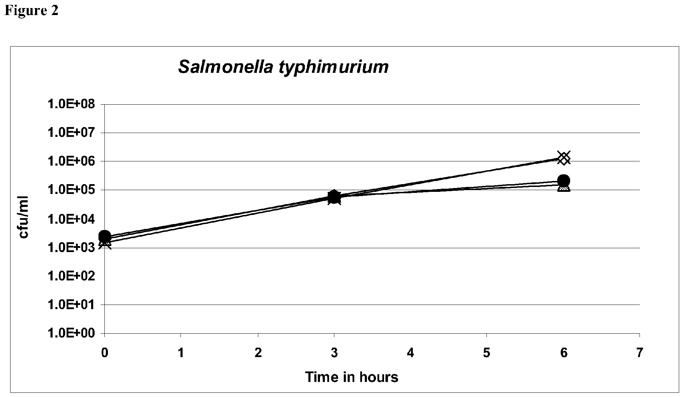

BEBA 2 HA which is already on the market, contains about 2x10⁷ CFU/g of the probiotic strains, corresponding to ca. 3x10⁶ CFU/ml in the reconstituted product, i.e. far less than was added to NAN 1 in this study. As shown in Figure 2, no inhibition was observed with this product, neither did the pH decrease (Table 1).

In the Figures, the following symbols are used:
- ◊- represents the NAN 1 infant formulas containing *B. lactis* (3x10⁷ CFU/ml).
- Δ- represents the NAN 1 infant formula containing *S. thermophilus* (3x10⁷ CFU/ml).
- - represent the NAN 1 infant formula containing *B. lactis* and *S. thermophilus* (3x10⁷ CFU/ml each).
- ×- represent the BEBA 2 HA infant formula containing *B. lactis* and *S. thermophilus* (3x10⁶ CFU/ml each).

The inhibitory effect of the infant formulas supplied with 3x10⁷ CFU/ml *St. thermophilus* (-Δ- and -●-), which is rapidly acidifying, is clearly seen after three hours.

In contrast, the infant formulas containing no or only 3x10⁶ CFU/ml of probiotic bacteria (-◇- and -×-) were not inhibitory, even after 6 hours. In this experiment, -×- represents a commercially available infant formula containing probiotics in amounts that are not sufficient to obtain the protective or safety effect according to the present invention.

**Table 1. pH in infant formulas containing different probiotic and challenge strains**

| **Product** | **Probiotic strain/s** | **pH in reconstituted product** | **pH after 6 h at 37°C** | |
|---|---|---|---|---|
| | | | ***E. coli* O157/H7** | ***Salmonella* Typhimurium** |
| NAN 1 | | 6.6 | | |
| NAN 1 | Bb12 | | 6.1 | 6.3 |
| NAN 1 | TH4 | | 4.3 | 4.3 |
| NAN 1 | Bb12+TH4 | | 4.3 | 4.3 |
| BEBA 2 HA | Bb12+TH4 | 6.6 | 6.6 | 6.6 |

### CONCLUSION

### Acidification

The observed separation/coagulation of acidified products upon prolonged storage under conditions favourable for micro organisms growth, might serve as an indicator of abuse storage. In this case it will prevent use and protect the consumer from eventual microbiological hazards.

### Probiotic

The probiotic strain *Streptococcus thermophilus* TH4 (DSM 15957) may limit the growth of pathogenic bacteria in NAN 1, however, there are some limitations in its use:
To achieve an antimicrobial effect sufficient quantities of probiotic bacteria need to be added (about 5-10 times more than applied in probiotic formula currently available on the market).

The quantity and kind of probiotic bacterium, which is added as a safety system to the powdered nutritional needs thus to be determined according to the principle that the pH of the nutritional composition, after reconstitution and storage at 37°C for 6 hours is preferably at 5 or below.
This can be achieved by balancing the acidification-capacity of the selected lactic acid bacterium against the quantity of living bacteria to be present in the powdered formula. Preferably, a rapidly acidifying lactic acid bacterium is selected, in order to keep the amount of living bacteria added to the composition as low as possible.

## Claims

1. A method of reducing the growth of pathogenic bacteria in powdered infant formula after reconstitution, the method comprising the step of including living lactic acid bacteria in the powdered infant formula in an amount of at least 5x10⁷ CFU/g of powder, wherein the lactic acid bacterium is *Streptococcus thermophilus TH4.* (DSM 15957)

2. The method of Claim 1, wherein the living lactic acid bacteria are present in an amount of at least 10⁸ CFU/g of powder.

3. The method of Claim 1 or 2, wherein the living lactic acid bacteria are present in an amount of at least 5 x 10⁸ CFU/g of powder.

4. The method of any of claims 1-3 wherein said powdered infant formula comprises Bifidobacterium Bb12. (DSM 15954)

5. A method of preparing a powdered infant formula comprising lactic acid bacteria for inhibiting growth of pathogenic bacteria, the method comprising the step of preparing a powdered infant formula and adding living lactic acid bacteria in an amount of least 5x10⁷ CFU/g of powder to the infant formula, wherein the lactic acid bacterium is *Streptococcus thermophilus TH4.* (DSM 15957)

6. The method of claim 5 wherein said powdered infant formula comprises Bifidobacterium Bb12. (DSM 15954)

## Patentansprüche

1. Verfahren zum Reduzieren des Wachstums krankheitserregender Bakterien in pulverförmiger Säuglingsformel nach Rekonstitution, wobei das Verfahren den Schritt des Einbringens lebender Milchsäurebakterien in die pulverförmige Säuglingsformel in einer Menge von mindestens 5x10⁷ KBE/g Pulver umfasst,
wobei das Milchsäurebakterium *Streptococcus thermophilus TH4* ist. (DSM 15957)

2. Verfahren nach Anspruch 1, wobei die lebenden Milchsäurebakterien in einer Menge von mindestens 10⁸ KBE/g Pulver vorhanden sind.

3. Verfahren nach Anspruch 1 oder 2, wobei die lebenden Milchsäurebakterien in einer Menge von mindestens 5 x 10⁸ KBE/g Pulver vorhanden sind.

4. Verfahren nach einem der Ansprüche 1-3, wobei die pulverförmige Säuglingsformel Bifidobacterium Bb12 umfasst. (DSM 15954)

5. Verfahren zum Herstellen einer pulverförmigen Säuglingsformel, die Milchsäurebakterien umfasst, zum Hemmen des Wachstums krankheitserregender Bakterien, wobei das Verfahren den Schritt des Herstellens einer pulverförmigen Säuglingsformel und des Zugebens lebender Milchsäurebakterien in einer Menge von mindestens 5x10⁷ KBE/g Pulver zu der Säuglingsformel umfasst, wobei das Milchsäurebakterium *Streptococcus thermophilus TH4* ist. (DSM 15957)

6. Verfahren nach Anspruch 5, wobei die pulverförmige Säuglingsformel Bifidobacterium Bb12 umfasst. (DSM 15954)

## Revendications

1. Procédé de réduction de la croissance de bactéries pathogènes dans une préparation en poudre pour nourrissons après reconstitution, le procédé comprenant l'étape d'inclusion de bactéries d'acide lactique vivantes dans la préparation en poudre pour nourrissons en une quantité d'au moins 5x10⁷ UFC/g de poudre,
dans lequel la bactérie d'acide lactique est *Streptococcus thermophilus TH4.* (DSM 15957)

2. Procédé selon la revendication 1, dans lequel les bactéries d'acide lactique vivantes sont présentes en une quantité d'au moins 10⁸ UFC/g de poudre.

3. Procédé selon la revendication 1 ou 2, dans lequel les bactéries d'acide lactique vivantes sont présentes en une quantité d'au moins 5 x 10⁸ UFC/g de poudre.

4. Procédé selon l'une quelconque des revendications 1 à 3, dans lequel ladite préparation en poudre pour nourrissons comprend du Bifidobacterium Bb12. (DSM 15954)

5. Procédé de préparation d'une préparation en poudre pour nourrissons comprenant des bactéries d'acide lactique pour inhiber la croissance de bactéries pathogènes, le procédé comprenant l'étape de préparation d'une préparation en poudre pour nourrissons et d'ajout de bactéries d'acide lactique vivantes en une quantité d'au moins 5x10⁷ UFC/g de poudre à la préparation pour nourrissons, dans lequel la bactérie d'acide lactique est *Streptococcus thermophilus TH4.* (DSM 15957)

6. Procédé selon la revendication 5, dans lequel ladite préparation en poudre pour nourrissons comprend du *Bifidobacterium* Bb12. (DSM 15954)
